# DEMANDE DE BREVET EUROPEEN

(11) **EP 2 634 230 A2**
(43) Date de publication de la demande: **04.09.2013**
(21) Numéro de dépôt: 13156390.0
(22) Date de dépôt: 22.02.2013
(51) Int. Cl.: C09K 3/10, C03C 27/10, C09J 123/22, E06B 3/00

(54) **Mastic mono-composant thermofusible pour sceller des vitrages isolants ou des panneaux photovoltaïques, et module isolant l'incorporant.**

(30) Priorité: 29.02.2012 FR 1251862
(71) Demandeur: LE JOINT FRANCAIS, 75008 Paris (FR)
(72) Inventeur: Canova, Pierre, 94160 Saint-Mande (FR); Napoletano, Claire, 95530 La Frette sur Seine (FR); Coralie, Mickaël, 45700 Pannes (FR); Carniol, Natacha, 45200 Amilly (FR)
(74) Mandataire: Bolinches, Michel Jean-Marie

(57) **Abrégé**

La présente invention concerne un mastic mono-composant thermofusible utilisable pour le scellement de panneaux vitrés isolants ou photovoltaïques, et un module vitré ou photovoltaïque scellé par ce mastic. L'invention s'applique en particulier à la réalisation d'une barrière d'étanchéité externe entre plusieurs panneaux vitrés d'un module de vitrage isolant.

Ce mastic (7) qui est notamment apte à sceller des panneaux vitrés (2 et 3) est caractérisé en ce qu'il comprend, selon une fraction massique inclusivement comprise entre 10 et 20 %, un vulcanisat thermoplastique (TPV) et, selon une fraction massique inclusivement comprise entre 40 et 60 %, un système tackifiant à base d'au moins une résine tackifiante compatible avec ce vulcanisat thermoplastique.

## Description

La présente invention concerne un mastic mono-composant thermofusible notamment pour le scellement de panneaux vitrés isolants ou photovoltaïques, et un module vitré ou photovoltaïque scellé par ce mastic. L'invention s'applique en particulier à la réalisation d'une barrière d'étanchéité externe entre plusieurs panneaux vitrés (par exemple au nombre de deux ou trois) d'un module de vitrage isolant.

Les doubles vitrages isolants comportent de manière connue deux panneaux constitués de feuilles planes de verre maintenues parallèles entre elles par un espaceur métallique ou composite (e.g. en plastique par exemple renforcé par des fibres de verre, ou recouvert d'un feuillard métallique par exemple en acier inoxydable ou en aluminium), le scellement pouvant être obtenu par l'utilisation d'un polymère thermoplastique formant une première barrière interne confinée latéralement entre l'espaceur et les deux panneaux, et par l'utilisation d'un mastic étanche formant une seconde barrière externe qui recouvre le pourtour de ce profilé en s'étendant continûment d'un panneau à l'autre. La combinaison de ces deux barrières doit permettre de conférer au module, d'une part, une imperméabilité satisfaisante et pérenne aux gaz et/ou à l'humidité (i.e. durant toute sa durée d'utilisation prévue) et, d'autre part, un maintien mécanique satisfaisant des panneaux sur ce profilé.

On distingue usuellement deux familles de mastics étanches pour constituer cette seconde barrière, qui sont les mastics thermofusibles et les mastics élastomères mono-composant ou bi-composants.

Les mastics thermofusibles actuellement utilisés présentent une plasticité élevée et donc une mise en oeuvre aisée en plus d'une imperméabilité aux gaz et/ou à l'humidité satisfaisante, mais ils ont pour inconvénient majeur de présenter une certaine rigidité se traduisant par des propriétés élastiques insuffisantes nuisant au maintien mécanique des panneaux lors de leur manipulation et/ou de leur transport et pouvant causer un assemblage non conforme sur le chantier.

Les mastics élastomères mono-composant ou bi-composants, qui sont par exemple de type polyuréthanne (PUR), polysulfure ou élastomère silicone, polymérisent pour acquérir après un certain temps (lequel est fonction des conditions ambiantes de mise en oeuvre et de stockage) les propriétés mécaniques souhaitées. Si l'élasticité de ces mastics est tout à fait satisfaisante, il n'en va pas de même pour leur imperméabilité aux gaz et/ou à l'humidité qui est nettement inférieure à celle des mastics thermofusibles. D'autres inconvénients de ces mastics élastomères résident dans leur mise en oeuvre malaisée et dans le fait qu'ils ne sont généralement pas recyclables et sont polluants notamment en raison des métaux et isocyanates qu'ils incluent, ce qui impose un nettoyage poussé des installations.

Le document de Brevet EP-A1-1 462 500 décrit un mastic mono-composant thermofusible pour le scellement de panneaux vitrés, qui réagit chimiquement avec l'air ambiant suite à son application à chaud et à son refroidissement, de sorte que son durcissement au contact de l'air se traduit par sa réticulation chimique qui permet de le rendre mécaniquement adapté au scellement des panneaux vitrés. Dans l'exemple de réalisation présenté dans ce document, ce mastic comprend à titre majoritaire un polymère thermoplastique constitué d'un polyisobutylène et, à titre minoritaire, des résines comprenant une résine de durcissement à l'air, des résines tackifiantes ainsi que d'autres additifs.

Un but de la présente invention est de proposer un mastic mono-composant thermofusible apte à sceller des panneaux vitrés isolants ou photovoltaïques (i.e. utilisable pour le scellage de ces panneaux mais pouvant également convenir pour d'autres applications), qui ne réticule pas après son application avec l'oxygène et/ou l'humidité atmosphériques par réaction chimique et qui permette de remédier aux inconvénients précités des mastics thermofusibles et des mastics élastomères mono-ou bi-composants.

Ce but est atteint en ce que la Demanderesse vient de découvrir d'une manière inattendue que la combinaison, selon une fraction massique dans le mastic inclusivement comprise entre 10 % et 20 %, d'un vulcanisat thermoplastique (TPV pour « ThermoPlastic Vulcanizate » en anglais) et, selon une fraction massique dans ce mastic inclusivement comprise entre 40 % et 60 %, d'un système tackifiant à base d'au moins une résine tackifiante compatible avec ce vulcanisat thermoplastique, permet d'obtenir un tel mastic mono-composant thermofusible présentant après refroidissement, d'une part, des propriétés élastiques satisfaisantes comparables à celles des mastics élastomères mono-ou bi-composants précités et permettant aux panneaux de résister aux contraintes mécaniques dues aux variations de température, de pression et aux agressions de l'environnement, et, d'autre part, une imperméabilité aux gaz et à l'humidité améliorée par rapport à celle de ces mastics élastomères et comparable à celle des mastics thermofusibles connus.

On notera qu'un mastic selon l'invention est dépourvu de toute résine durcissant à l'air ambiant, ce mastic n'étant pas apte à réticuler par réaction chimique suite à son application.

On notera également que les mastics selon l'invention présentent l'avantage d'être recyclables et non polluants du fait qu'ils n'incorporent ni métaux, ni isocyanates, notamment, et que ce caractère recyclable permet de limiter les pertes de matière dues aux réglages des machines, purges et/ou relatives à la mise en oeuvre des mastics. De plus, leur nature mono-composant facilite leur mise en oeuvre (pas de nettoyage poussé) et évite les problèmes de dosage.

On notera en outre que la nature thermofusible des mastics selon l'invention les rend manipulables dès refroidissement à température ambiante (typiquement suite à quelques minutes).

Selon une autre caractéristique préférentielle de l'invention, ledit vulcanisat thermoplastique que comprend ce mastic n'appartient pas à la famille des TPSiV (élastomères silicones réticulés à transformation thermoplastique).

Selon une autre caractéristique de l'invention, ladite au moins une résine tackifiante peut présenter un point de ramollissement mesuré par bille et anneau inclusivement compris entre 85° C et 170° C et avantageusement entre 90° C et 150° C.

On notera que cette ou ces résines tackifiantes permettent notamment de rendre le vulcanisat thermoplastique plus souple et élastique et en outre d'améliorer l'adhérence (i.e. le caractère collant) du mastic aux matériaux vitrés et métalliques/ composites du module vitré ou photovoltaïque incorporant ce mastic, ces matériaux métalliques étant typiquement l'aluminium ou l'acier galvanisé et ces matériaux composites étant par exemple une matière plastique renforcée par des fibres de verre ou recouverte d'un feuillard métallique, pour l'espaceur d'un module vitré.

On notera également que ce point de ramollissement relativement bas qui est utilisé pour ladite ou chaque résine tackifiante autorise une température d'application modérée des mastics thermofusibles selon l'invention, cette température d'application pouvant être comprise entre 100° C et 200° C et de préférence entre 120° C et 160°C, ce qui facilite l'application de ces mastics.

De préférence, ledit vulcanisat thermoplastique (TPV) est à base d'un élastomère à polymérisation par un catalyseur métallocène et d'une polyoléfine greffée ou non, et ce TPV est par exemple tel que décrit dans le document de Brevet EP-B1-0 840 763 dans le cas d'une polyoléfine greffée et répond par exemple à la dénomination commerciale « VEGAPRENE », bien que d'autres TPV soient utilisables.

A titre encore plus préférentiel, ce TPV est tel que ledit élastomère à polymérisation par un catalyseur métallocène est choisi dans le groupe constitué par les terpolymères éthylène-propylène-diène (EPDM), les polyoctènes, les copolymères isoprène-isobutylène (IIR, i.e. caoutchouc butyl), les caoutchoucs nitriles (NBR, i.e. copolymères d'acrylonitrile-butadiène) et leurs mélanges. Avantageusement, on utilise un EPDM à titre d'élastomère pour ce TPV, bien que d'autres élastomères diéniques ou non soient utilisables, qu'ils soient des homopolymères ou des copolymères au sens large (i.e. incluant par exemple des terpolymères).

Quant à ladite polyoléfine, elle est de préférence choisie dans le groupe constitué par les polyéthylènes, les copolymères éthylène-acétate de vinyle (EVA) et leurs mélanges. A titre encore plus préférentiel, cette polyoléfine est un polyéthylène, étant précisé que des polyoléfines telles que des copolymères ou terpolymères de l'éthylène autres que l'EVA sont utilisables pour obtenir ce TPV.

Egalement à titre préférentiel, ce TPV comprend un système de réticulation à base d'une résine phénolique ou à base d'un peroxyde, ainsi qu'une ou plusieurs charges organique(s) telles que des noirs de carbone et/ou minérale(s) telles que des silices, carbonates, argiles, craies ou kaolin, à titre non limitatif.

De préférence, ce TPV n'est pas réticulé par un composé aminosilane, ni par un composé alkylamine.

Ce TPV inclus dans les mastics selon l'invention peut comprendre en outre tout ou partie des additifs ou adjuvants habituellement utilisés comme par exemple des antistatiques, des lubrifiants, des antioxydants, des agents de mise en oeuvre ou encore des promoteurs d'adhérence, pour autant que ces additifs soient compatibles entre eux.

Avantageusement, ledit système tackifiant peut comprendre plusieurs résines tackifiantes, dont au moins :
- une première résine tackifiante présente à titre majoritaire dans ce système tackifiant et de point de ramollissement mesuré par bille et anneau inclusivement compris entre 92° C et 98° C,
- une deuxième résine tackifiante de point de ramollissement mesuré par bille et anneau inclusivement compris entre 90° C et 95° C, et
- une troisième résine tackifiante de point de ramollissement mesuré par bille et anneau inclusivement compris entre 142° C et 152° C.

De préférence, ladite première résine est une résine terpène phénolique présente dans ledit système tackifiant selon une fraction massique inclusivement comprise entre 50 % et 60 %.

A titre également préférentiel, ladite deuxième résine est à base d'un copolymère d'éthylène et est présente dans ledit système tackifiant selon une fraction massique inclusivement comprise entre 20 % et 30 %, cette deuxième résine étant de préférence choisie dans le groupe constitué par les terpolymères statistiques éthylène-acétate de vinyle-anhydride maléique, les terpolymères éthylène-acrylate-anhydride maléique, les copolymères éthylène-acrylate, les copolymères d'éthylène fonctionnalisés anhydride maléique et leurs mélanges.

Egalement préférentiellement, ladite troisième résine est une résine terpène phénolique présente dans ledit système tackifiant selon une fraction massique inclusivement comprise entre 10 % et 25 %.

On notera que ce système tackifiant permet de faire en sorte que les mastics de l'invention satisfassent aux normes européennes EN 1279-2, -3, -4, -5, -6 (2002), étant précisé que le protocole de cette dernière norme a été modifié de sorte à être adapté aux mastics thermofusibles.

Selon une autre caractéristique de l'invention, ledit mastic comprend en outre un système plastifiant selon une fraction massique inclusivement comprise entre 10 % et 20 % et de préférence entre 14 % et 17 %, ce système plastifiant comprenant au moins un composé pouvant être choisi dans le groupe constitué par les polyisobutylènes, les polybutènes, les huiles plastifiantes paraffiniques et aromatiques (e.g. naphténiques), et leurs mélanges.

De préférence, ledit système plastifiant comprend un mélange d'au moins :
- un premier polyisobutylène de masse moléculaire moyenne en poids Mw, mesurée par chromatographie par perméation de gel (GPC), inclusivement comprise entre 30 000 et 40 000 g/mol, et
- un second polyisobutylène de masse moléculaire moyenne en poids Mw, mesurée par chromatographie par perméation de gel (GPC), inclusivement comprise entre 45 000 et 60 000 g/mol.

Selon une autre caractéristique de l'invention, ledit mastic peut comprendre en outre, selon une fraction massique inclusivement comprise entre 0,2 % et 1 %, un système promoteur d'adhésion de type silane et, selon une fraction massique inclusivement comprise entre 10 % et 20 %, une ou plusieurs charges diluantes de type organique(s) et/ou minérale(s), par exemple telles que du caoutchouc butyl (ou un autre polymère) et/ou du talc, de la craie ou un carbonate.

Un mastic selon l'invention peut être préparé par mélangeage dans une cuve équipée d'un dispositif de type extrudeuse, étant précisé d'autres dispositifs sont utilisables.

Un module vitré ou photovoltaïque selon l'invention comporte plusieurs panneaux parallèles, s'agissant par exemple d'un module à double ou à triple vitrage dans lequel ces panneaux sont reliés entre eux par un espaceur métallique ou composite. Selon l'invention, ce module comporte entre ces panneaux un mastic de scellement mono-composant thermofusible tel que défini ci-dessus, ce mastic formant au moins une barrière d'étanchéité externe pour le module dans le cas de panneaux vitrés (i.e. formant la seconde barrière qui recouvre le pourtour de ce profilé en s'étendant continûment d'un panneau à l'autre, et optionnellement en outre la première barrière interne qui est confinée latéralement entre l'espaceur et les panneaux).

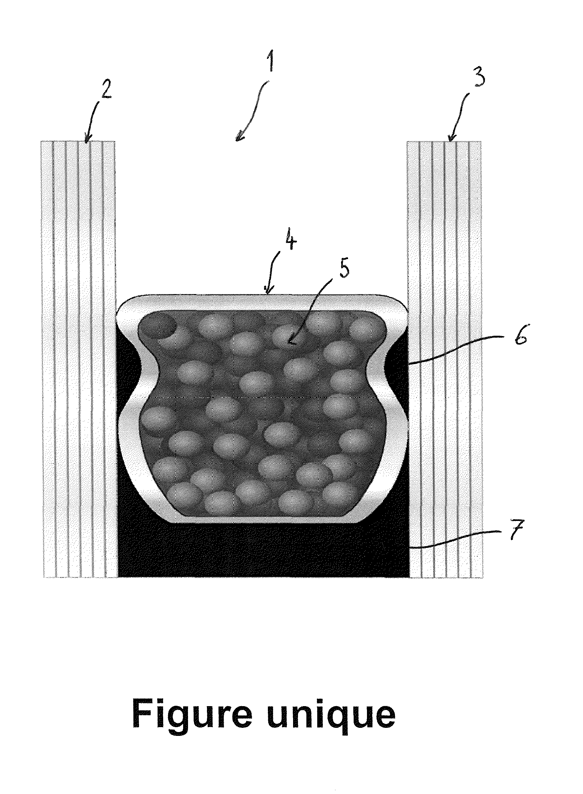

D'autres caractéristiques, avantages et détails de la présente invention ressortiront à la lecture de la description suivante d'un exemple de réalisation de l'invention, donné à titre illustratif et non limitatif, ladite description étant réalisée en référence avec le dessin joint, dans lequel :
la figure unique est une vue schématique en section transversale d'un module isolant à double vitrage selon l'invention.

De manière connue, le module vitré 1 comporte deux feuilles planes de verre 2 et 3 maintenues parallèles entre elles par un espaceur 4 qui est rempli d'un tamis moléculaire de billes 5 absorbant l'humidité. Ces feuilles 2 et 3 sont scellées au profilé 4 en une première barrière interne 6 confinée latéralement entre le profilé 4 et les feuilles 2 et 3, et en une seconde barrière externe 7 qui recouvre le pourtour du profilé 4 en s'étendant continûment d'une feuille 2 à l'autre feuille 3 et qui est constituée d'un mastic mono-composant thermofusible selon l'invention.

La Demanderesse a préparé une composition d'un tel mastic selon l'invention par mélangeage des ingrédients recensés dans le tableau 1 ci-après dans une cuve équipée d'un dispositif de type extrudeuse à deux bras qui présentent chacun sensiblement une forme de « Z » et qui tournent en friction mutuelle l'un contre l'autre, ce dispositif comprenant en outre une vis sans fin en bas de la cuve.

On a testé le mastic obtenu sur des matériaux en verre, en aluminium et en acier galvanisé, afin de déterminer notamment s'il satisfaisait aux normes européennes suivantes :
- EN 1279-6 (2002) : test de traction à force constante via deux mâchoires disposées de part et d'autre d'une éprouvette contenant le matériau et permettant de conclure à son fluage à chaud minimisé, le protocole expérimental de cette norme ayant été légèrement modifié pour être adapté aux mastics thermofusibles avec une pression de 3 MPa pendant 10 minutes et une température modifiée comprise entre 70° C et 100° C, et
- EN 1279-4 (2002) : test de traction à déplacement constant à 24° C puis avec un mûrissement de 24 heures et 28 jours, avec une rupture devant se situer hors du triangle « AOB » du graphe force-allongement, où A et B correspondent respectivement à 0,5.10⁵ Pa et à 50 % d'allongement.

**Tableau 1 :**

| **ingrédients** | **Fractions massiques** |
|---|---|
| TPV à base d'un EPDM réticulé par une résine phénolique, et d'un polyéthylène | 14,63 % |
| Premier plastifiant polyisobutylène OPPANOL B10 SFN | 7,15 % |
| Second plastifiant polyisobutylène OPPANOL B12 SFN | 8,81 % |
| Première résine tackifiante DERTOPHENE T | 26,75 % |
| Seconde résine tackifiante OREVAC 9305 | 13,00 % |
| Troisième résine tackifiante SYLVARES TP 7042 E | 9,00 % |
| talc (charge diluante) | 13,61 % |
| caoutchouc butyl (charge diluante) | 6,50 % |
| Promoteur d'adhésion SIL A172/DYN VTMOEO | 0,27 % |
| Promoteur d'adhésion SILANE A1100 | 0,27 % |

La Demanderesse a vérifié que le mastic mono-composant thermofusible préparé suivant cette composition, outre le fait qu'il est extrudable selon un débit suffisant, satisfait bien aux normes précitées EN 1279-2, -3, -4, -5, -6 et présente en outre un fluage à chaud minimisé, ce qui le rend particulièrement bien adapté en termes d'élasticité notamment, pour assurer un maintien mécanique satisfaisant des panneaux de verre d'un module de vitrage isolant comportant un espaceur par exemple en aluminium ou en acier galvanisé, ou des panneaux d'un module photovoltaïque.

La Demanderesse a en outre vérifié l'imperméabilité aux gaz et à l'humidité ambiante que procure ce mastic selon l'invention à de tels modules, ainsi que la résistance satisfaisante de ce mastic à des vieillissements thermiques, aux UV et à l'humidité.

## Revendications

1. Mastic mono-composant thermofusible (7) utilisable pour le scellement de panneaux vitrés isolants (2 et 3) ou photovoltaïques, **caractérisé en ce qu'**il comprend, selon une fraction massique inclusivement comprise entre 10 % et 20 %, un vulcanisat thermoplastique (TPV) et, selon une fraction massique inclusivement comprise entre 40 % et 60 %, un système tackifiant à base d'au moins une résine tackifiante compatible avec ce vulcanisat thermoplastique.

2. Mastic (7) selon la revendication 1, **caractérisé en ce qu'**il n'est pas apte, après son application, à réticuler par réaction chimique avec l'oxygène et/ou l'humidité atmosphériques, le mastic étant dépourvu de toute résine durcissant à l'air ambiant.

3. Mastic (7) selon la revendication 1 ou 2, **caractérisé en ce que** ladite au moins une résine tackifiante présente un point de ramollissement mesuré par bille et anneau inclusivement compris entre 85° C et 170° C.

4. Mastic (7) selon une des revendications précédentes, **caractérisé en ce que** ledit vulcanisat thermoplastique est à base d'un élastomère à polymérisation par un catalyseur métallocène et d'une polyoléfine greffée ou non.

5. Mastic (7) selon la revendication 4, **caractérisé en ce que** ledit élastomère à polymérisation par un catalyseur métallocène est choisi dans le groupe constitué par les terpolymères éthylène-propylène-diène (EPDM), les polyoctènes, les copolymères isoprène-isobutylène (IIR), les caoutchoucs nitriles (NBR) et leurs mélanges.

6. Mastic (7) selon la revendication 4 ou 5, **caractérisé en ce que** ladite polyoléfine est choisie dans le groupe constitué par les polyéthylènes, les copolymères éthylène-acétate de vinyle (EVA) et leurs mélanges.

7. Mastic (7) selon une des revendications précédentes, **caractérisé en ce que** ledit vulcanisat thermoplastique comprend un système de réticulation à base d'une résine phénolique ou à base d'un peroxyde.

8. Mastic (7) selon une des revendications précédentes, **caractérisé en ce que** ledit système tackifiant comprend plusieurs résines tackifiantes, dont au moins :
- une première résine tackifiante présente à titre majoritaire dans ce système tackifiant et de point de ramollissement mesuré par bille et anneau inclusivement compris entre 92° C et 98° C,
- une deuxième résine tackifiante de point de ramollissement mesuré par bille et anneau inclusivement compris entre 90° C et 95° C, et
- une troisième résine tackifiante de point de ramollissement mesuré par bille et anneau inclusivement compris entre 142° C et 152° C.

9. Mastic (7) selon la revendication 8, **caractérisé en ce que** ladite première résine est une résine terpène phénolique présente dans ledit système tackifiant selon une fraction massique inclusivement comprise entre 50 % et 60 %.

10. Mastic (7) selon la revendication 8 ou 9, **caractérisé en ce que** ladite deuxième résine est à base d'un copolymère d'éthylène et est présente dans ledit système tackifiant selon une fraction massique inclusivement comprise entre 20 % et 30 %, cette deuxième résine étant de préférence choisie dans le groupe constitué par les terpolymères statistiques éthylène-acétate de vinyle-anhydride maléique, les terpolymères éthylène-acrylate-anhydride maléique, les copolymères éthylène-acrylate, les copolymères d'éthylène fonctionnalisés anhydride maléique et leurs mélanges.

11. Mastic (7) selon une des revendications 8 à 10, **caractérisé en ce que** ladite troisième résine est une résine terpène phénolique présente dans ledit système tackifiant selon une fraction massique inclusivement comprise entre 10 % et 25 %.

12. Mastic (7) selon une des revendications précédentes, **caractérisé en ce qu'**il comprend en outre un système plastifiant selon une fraction massique inclusivement comprise entre 10 % et 20 %, ce système plastifiant comprenant au moins un composé choisi dans le groupe constitué par les polyisobutylènes, les polybutènes, les huiles plastifiantes paraffiniques et aromatiques, et leurs mélanges.

13. Mastic (7) selon la revendication 12, **caractérisé en ce que** ledit système plastifiant comprend un mélange d'au moins :
- un premier polyisobutylène de masse moléculaire moyenne en poids Mw, mesurée par chromatographie par perméation de gel (GPC), inclusivement comprise entre 30 000 et 40 000 g/mol, et
- un second polyisobutylène de masse moléculaire moyenne en poids Mw, mesurée par chromatographie par perméation de gel (GPC), inclusivement comprise entre 45 000 et 60 000 g/mol.

14. Mastic (7) selon une des revendications précédentes, **caractérisé en ce qu'**il comprend en outre, selon une fraction massique inclusivement comprise entre 0,2 % et 1 %, un système promoteur d'adhésion de type silane et, selon une fraction massique inclusivement comprise entre 10 % et 20 %, une ou plusieurs charges diluantes de type organique(s) et/ou minérale(s).

15. Module vitré (1) ou photovoltaïque à plusieurs panneaux (2 et 3) parallèles, par exemple à double ou triple vitrage, **caractérisé en ce que** ce module comporte entre ces panneaux un mastic de scellement (7) mono-composant thermofusible selon une des revendications précédentes, ce mastic formant au moins une barrière d'étanchéité externe (7) pour le module dans le cas de panneaux vitrés reliés entre eux par un espaceur (4) métallique ou composite.
